# EUROPEAN PATENT APPLICATION

(11) **EP 3 693 451 A1**
(43) Date of publication of application: **12.08.2020**
(21) Application number: 19155797.4
(22) Date of filing: 06.02.2019
(51) Int. Cl.: C12J 1/02, C12G 3/07, C12J 1/08

(54) **ARTISANAL METHOD FOR THE PRODUCTION OF WINE VINEGAR**

(71) Applicant: Victor Guedes - Industria E Comércio, S.A., 1070-184 Lisboa (PT)
(72) Inventor: CRUZ, Pedro, 1070-184 Lisboa (PT)
(74) Representative: Pereira da Cruz, Joao

(57) **Abstract**

The present invention relates to the production of vinegar. It is an object of the present invention to provide an artisanal process for the manufacture of wine vinegar comprising the following steps: a) dilution of the selected wine as raw material between 30 and 70%; b) preparation of the inoculum which includes mainly acetic bacteria of the genera Acetobacter and Gluconobacter; c) addition of the wine of step a) and 10% to 30% of the inoculum selected from step b), into a fermenter with porous support in which vines and wood chips will be placed, the total volume being 20% to 40% of the usable volume of the fermenter; d) starting the fermentation with recirculation of the liquid, keeping the air inlets of the fermenter open; e) control of alcohol content up to 1%; f) addition of wine diluted to 50% when the amount of alcohol approaches 1%; g) completion of the fermentation when the total usable volume of the fermenter is reached and the alcohol concentration is less than 1% and acidity equal to or greater than 6%. It is further an object of the present invention a vinegar produced by the process disclosed therein.

## Description

### FIELD OF THE INVENTION

The present invention falls within the scope of vinegar production, specifically a new artisanal process of wine vinegar production.

The present invention discloses a wine vinegar and a slow artisanal method for its preparation. The object of the present invention is wine vinegar, wherein the wine used as the raw material is a D.O. (Designation of Origin) fortified and liqueur wine, which has an acidity of 6 to 10%. It is also an object of the present invention a slow artisanal method for obtaining the said vinegar. The method now disclosed operates discontinuously and comprises the following steps: a) selection of the raw material, in particular, a liqueur wine is selected; b) selection of the acetic bacteria to be used in the fermentation, which are chosen according to the wine selected in the previous step; c) introducing the materials from the previous steps into a porous carrier fermenter, wherein vines and wood chips are inserted which, when recirculating, impart to the liquid the scents released to that same vines and wood chips; d) fermentation. The fermentation takes place between 3 to 4 weeks at room temperature and with natural oxygenation.

### BACKGROUND OF THE INVENTION

The present invention finds its closest background in processes for the manufacture of wine vinegar, more especially in artisanal processes for the production of the aforementioned type of vinegar.

The patent application under publication number CN108034610 discloses vinegar produced with bacteria Acetobacter oxydans 1.1610, which are preserved at the China General Microbiological Culture Collection Center, and whose preservation registration number is CGMCC No.14778. The invention further describes vinegar prepared with these bacteria Acetobacter oxydans 1.1610. This patent application protects those specific bacteria that can be used in the production of vinegar. No indication is given as to which process of vinegar production is used.

The patent application with publication number CN107828623 discloses a process for the production of grape vinegar, wherein the process comprises the following steps: S1, selection of the material; S2, alcoholic fermentation; S3, acetic acid fermentation; S4, implantation sterilization; and S5, clarification inspection. The grape vinegar processing technology comprises submitting to fermentation twice, namely alcoholic fermentation and acetic acid fermentation; through the strict control of the technology optimization of each process, the raw material conversion rate reaches 95% or more; grape vinegar is prepared by pure biological process and contains no harmful substances such as heavy metals, formaldehyde and methanol or other impurities; AS1.41 acetic acid bacteria are adopted in the fermentation process of acetic acid, the vinegar formation time is short, the conversion rate is high. The process disclosed in this application uses *Saccharomyces cerevisiae* bacteria and various additional purification processes, unlike the process of the present invention.

Known wine vinegar manufacturing processes use any type of raw material, i.e. any type of wine, and the bacteria used in the fermentation are not chosen according to the starting material that is selected. In the processes intended for fast production of vinegars, the oxygen is injected which will accelerate the whole process, the latter occurring in about 24 hrs and being known as an industrialized continuous process.

These processes have several disadvantages as the vinegar obtained by them has a high turbidity, high foam production resulting from the injection of oxygen in the process, and additional purification processes such as filtration and clarification are further required. It is also important to note that the organoleptic characteristics of the vinegars produced by these industrialized methods are poor, since this type of process is very fast and the aromas are lost.

### TECHNICAL PROBLEMS SOLVED

The method of the present invention allows overcoming these disadvantages.

In particular, it allows a high quality product to be obtained, which preserves in a more genuine way the sensorial and organoleptic characteristics, namely taste and aroma of the raw material from which it originates and without the use of additional processes, such as filtration or clarification, or the use of any additional compounds. The process disclosed in the present patent application does not require the addition of nutrients, since the bacteria are adequate to the raw material and have the time (slow method) to transform the ethanol into acetic acid, not rapidly depleting the nutrients of the medium, so without the need for others to be added. Only the nutrients of the raw material are used.

### SUMMARY OF THE INVENTION

It is thus the object of this invention a slow and discontinuous artisanal process for the manufacture of wine vinegar.

It is yet another object of the present invention to provide wine vinegar obtained by this process.

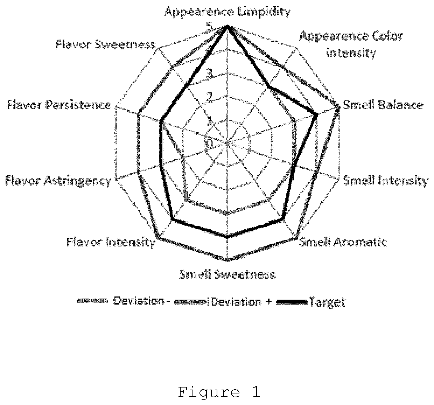

Figure 1 shows an organoleptic profile for vinegar obtained by the process of the present invention, namely the D.O. Madeira wine vinegar.

### DETAILED DESCRIPTION OF THE INVENTION

The technical characteristics of the present invention, in all their other combinations, are suitable for the artisanal and discontinuous production of wine vinegar, of high nutritional quality and with excellent sensorial qualities.

The present invention discloses a new artisanal process, which is slow and discontinuous, for the production of wine vinegar comprising the following steps:
a) Diluting the selected wine as raw material between 30 and 70%;
b) Preparing the inoculum which includes mainly acetic bacteria of the genera Acetobacter and Gluconobacter;
c) Introducing the wine of step a) and 10% to 30% of the inoculum selected from step b), into a fermenter with porous support in which vines and wood chips will be placed, the total volume being 20% to 40% of the usable volume of the fermenter;
d) Starting the fermentation with recirculation of the liquid and keeping the air inlets of the fermenter open;
e) Controlling the alcohol content up to 1%;
f) Adding the wine diluted to 50% when the amount of alcohol approaches 1%;
g) Completing the fermentation when the total usable volume of the fermenter is reached and the alcohol concentration is less than 1% and acidity equal to or greater than 6%%.

In a preferred embodiment, the wine selected as the raw material is chosen from a liqueur wine and a still wine.

In another aspect, the still wine is selected among the common still wines and the I.G. (Geographical Indication) and D.O. (Designation of Origin) still wines from the various wine-growing regions of Portugal.

In a preferred embodiment, the dilution of step a) is carried out with water and vinegar.

In another preferred embodiment, the dilution of step a) is carried out with water.

In a preferred embodiment, the fermentation takes place in 3 to 4 weeks at room temperature, preferably at a temperature between 25 and 30°C, and with natural oxygenation, allowing a clear vinegar to be obtained and without the need to use additional processes such as clarification or filtration.

In a preferred embodiment, the wine selected as the raw material of step a) is a fortified wine, these wines having high values of sugar and alcohol allowing the vinegar obtained with the process of the present invention and from these wines to also have striking sensorial characteristics. The fortified wines having higher sugar and alcohol values than the still ones, a careful selection of the inoculum and control of the process are required in order to retain the maximum of the sensorial characteristics of the wine of origin.

In an even more preferred embodiment, the liqueur wine is a D.O. (Designation of Origin) wine, giving rise to vinegar of high quality, rich in flavours, aromas, and remarkable colours.

In yet another preferred embodiment, the wine D.O. is chosen from Port wine, Madeira wine, Carcavelos wine and Moscatel wine, among which are the ones of Setubal and Favaios/Alijó.

In a preferred embodiment, the process of the present invention uses an ethanol concentration of less than 11% (v/v), since the bacteria selected for fermentation are inhibited with the presence of higher values of ethanol.

In another preferred embodiment, the process disclosed in the present invention uses a concentration of acetic acid of less than 10%.

Preferably, the process of the present invention is a discontinuous process, a characteristic which is associated to slow fermentation and the type of fermenter used.

A further object of the present invention is the vinegar which is produced by the said method, wherein the vinegar thus obtained has, in a preferred embodiment, an acidity of 6-10%.

In another preferred embodiment, the vinegar produced by the process of this invention has a pH between 5.5 and 6.3.

### Example

To 350 L of Tawny Port Wine, 3 years, certified by the Port and Douro Wines Institute (IVDP), 350 L of water and 50 L of inoculum were added, which contained the acetic bacteria selected for the raw material in question, in a fermenter with porous support. Several sacks of vines and a small sack containing a mixture of various types of wood chips were put into the fermenter.

The starting conditions of the fermentation process at day t = 0 were room temperature = 10°C, 8.2% (v/v) of alcoholic strength, Total acidity of 0.74% in acetic acid. The air inlets in the fermenter have all been opened.

The evolution of the previously mentioned parameters was daily monitored through daily sampling. Whenever the alcoholic strength of the mixture in the fermenter drops to close to 1%, a new amount of the previously mentioned wine is added diluted.

The fermentation process ended when the usable volume of the fermenter was reached and the liquid had an alcoholic strength below 1%, more precisely 0.29% and total acidity in acetic acid as high as possible, in this case in particular 6.96%. The process was performed for a total of 41 days and at the end a volume of vinegar of 2870 litres was attained.

It was noted that the vinegar obtained with the conditions herein defined was approved and certified by the IVDP, having as main sensorial characteristics a golden red colour, clear, and without defects perceptible in terms of aroma and flavour, absent in defects. As regards the main physicochemical characteristics, it presents a total acidity of approximately 6% in acetic acid, and residual alcohol of less than 1.5% (v/v).

As will be evident to a person skilled in the art, the present invention should not be limited to the embodiments described herein, and a number of changes are possible which remain within the scope of this invention.

Of course, the preferred embodiments above described are combinable in the different possible forms, the repetition of all such combinations being herein avoided.

## Claims

1. An artisanal process of wine vinegar production, **characterized in that** it comprises the following steps:
a) Diluting the selected wine as raw material between 30 and 70%;
b) Preparing the inoculum which includes mainly acetic bacteria of the genera Acetobacter and Gluconobacter;
c) Introducing the wine of step a) and 10% to 30% of the inoculum selected from step b), into a fermenter with porous support in which vines and wood chips will be placed, the total volume being 20% to 40% of the usable volume of the fermenter;
d) Starting the fermentation with recirculation of the liquid and keeping the air inlets of the fermenter open;
e) Controlling the alcohol content up to 1%;
f) Adding the wine diluted to 50% when the amount of alcohol approaches 1%;
g) Completing the fermentation when the total usable volume of the fermenter is reached and the alcohol concentration is less than 1% and acidity equal to or greater than 6%%.

2. A process according to claim 1, **characterized in that** the wine selected as raw material from step a) is chosen from a liqueur wine and a still wine.

3. A process according to any of the previous claims, **characterized in that** the dilution of step a) is carried out with water and vinegar.

4. A process according to any of the previous claims, **characterized in that** the dilution of step a) is carried out with water.

5. A process according to any of the previous claims, **characterized in that** the liqueur and fortified wine is a D.O. (Designation of Origin) one.

6. A process according to any of the previous claims, **characterized in that** the D.O. wine is selected from Port wine, Madeira wine, Carcavelos wine and Moscatel wine, among which are the ones of Setúbal and Favaios/Alijó.

7. An artisanal process of vinegar production according to any of the previous claims, **characterized in that**, after the step g), the vinegar is placed into wood barrels.

8. An artisanal process of vinegar production according to any of the previous claims, **characterized in that** the fermentation occurs within 3 to 4 weeks.

9. An artisanal process of vinegar production according to any of the previous claims, **characterized in that** the fermentation occurs at a temperature of from 25 to 30°C.

10. An artisanal process of vinegar production according to any of the previous claims, **characterized in that** the fermentation occurs with natural oxygenation.

11. An artisanal process of vinegar production according to any of the previous claims, **characterized in that** the inoculum is prepared according to the wine selected as the raw material in step a) of claim 1.

12. An artisanal process of vinegar production according to any of the previous claims, **characterized in that** an ethanol concentration of less than 11% (v/v) is used.

13. An artisanal process of vinegar production according to any of the previous claims, **characterized in that** a concentration of acetic acid of less than 10% is used.

14. An artisanal process of vinegar production according to any of the previous claims, **characterized in that** it is a discontinuous process.

15. Vinegar **characterized in that** it is obtained by the process according to any of the previous claims.

16. Vinegar according to claim 15, **characterized in that** its acidity ranges from 6 to 10%.

17. Vinegar according to claim 15, **characterized in that** it has a pH between 5.5 and 6.3.
